# EUROPEAN PATENT APPLICATION

(11) **EP 4 648 117 A1**
(43) Date of publication of application: **12.11.2025**
(21) Application number: 25173978.5
(22) Date of filing: 02.05.2025
(51) Int. Cl.: H01M 4/04, H01M 4/133, H01M 4/1393, H01M 4/36, H01M 4/587, H01M 4/66, H01M 10/052, H01M 4/134, H01M 4/1395, H01M 4/38, H01M 4/02

(54) **NEGATIVE ELECTRODE FOR RECHARGEABLE LITHIUM BATTERY, AND RECHARGEABLE LITHIUM BATTERY INCLUDING THE SAME**

(30) Priority: 09.05.2024 KR 20240061418
(71) Applicant: SAMSUNG SDI CO., LTD., Yongin-si, Gyeonggi-do 17084 (KR)
(72) Inventor: LEE, Jinhyon, Yongin-si, Gyeonggi-do 17084 (KR); SONG, Suho, Yongin-si, Gyeonggi-do 17084 (KR); LEE, Sehee, Yongin-si, Gyeonggi-do 17084 (KR)
(74) Representative: Marks & Clerk LLP

(57) **Abstract**

The current disclosure includes a negative electrode for a rechargeable lithium battery and a rechargeable lithium battery including the negative electrode. The negative electrode for the rechargeable lithium battery includes a current collector and a negative active material layer including a negative active material on the current collector, wherein a PCR (Plane angle Change Ratio) value is about 5.0 or less.

## Description

### BACKGROUND

### (a) Field

Example embodiments relate to a negative electrode for a rechargeable lithium battery, and a rechargeable lithium battery including the negative electrode.

### (b) Description of the Related Art

With the increased use of electronic devices that use batteries such as, e.g., mobile phones, laptop computers, electric vehicles, and the like, demand for smaller, lighter and relatively high-capacity rechargeable lithium batteries is increasing. Improving performances of rechargeable lithium batteries may be advantageous.

Rechargeable lithium batteries typically include a positive electrode and a negative electrode having an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

One or more example embodiments include a negative electrode for a rechargeable lithium battery exhibiting desired or improved battery characteristics.

Another example embodiment includes a rechargeable lithium battery including the negative electrode.

One or more example embodiments include a negative electrode for a rechargeable lithium battery, the negative electrode including a current collector and a negative active material layer including a negative active material on the current collector, wherein a PCR (Plane angle Change Ratio) value defined by Equation 1 below is about 5.0 or less. PCR=a peak intensity at 2H(002) plane/[a peak intensity at 3R(101) plane and a peak intensity at Cu(111) plane]

In Equation 1, the peak intensity is a value from an X-ray diffraction measurement by using a CuKα ray.

Another example embodiment includes a rechargeable lithium battery including the negative electrode, a positive electrode, and a non-aqueous electrolyte.

At least some of the above and other features of the invention are set out in the claims.

A negative electrode for a rechargeable lithium battery may exhibit desired or improved battery characteristics.

### BRIEF DESCRIPTION OF THE DRAWINGS

FIG. 1 to FIG. 4 are schematic views showing rechargeable lithium batteries according to some example embodiments.
FIG. 5 is a graph showing the X-ray diffraction analysis for the current collector and the negative active material layer, after measuring the lifecycle characteristics of the cells according to Example 1 and Comparative Example 1.
FIG. 6 and FIG. 7 are magnification graphs showing some parts of FIG. 5.

### DETAILED DESCRIPTION

Hereinafter, example embodiments are described in detail. However, these embodiments are examples, the present disclosure is not limited thereto, and the present disclosure is defined by the scope of claims.

As used herein, when a definition is not otherwise provided, it will be understood that when an element such as a layer, film, region, or substrate is referred to as being "on" another element, it may be directly on the other element or intervening elements may also be present.

Unless otherwise specified herein, expressions in the singular include expressions in plural. Unless otherwise specified, "A or B" may indicate "includes A, includes B, or includes A and B."

As used herein, the term "combination thereof" may include a mixture, a laminate, a complex, a copolymer, an alloy, a blend, a reactant of constituents.

As used herein, when a definition is not otherwise provided, a particle diameter may be an average particle diameter. Such a particle diameter indicates an average particle diameter (D50) where a cumulative volume is about 50 volume% in a particle size distribution. The average particle diameter (D50) may be measured by a method well known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be obtained by distributing particles to be measured in a distribution solvent and introducing the distribution solvent to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50% standard of particle distribution in the measuring device.

In some embodiments, an average particle diameter may be measured by various techniques, and, for example, may be measured by a particle analyzer.

In some embodiments, a thickness may be measured by a SEM or a TEM image for the cross-section, but is not limited thereto, and the thickness may be measured by any technique, as long as the techniques may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are not substantially graphitized or slightly graphitized by heat treatment. The terms soft carbon and hard carbon may be well known in the related arts.

In some embodiments, the crystalline carbon and the amorphous carbon may be distinguished through XRD measurement. The crystalline carbon includes natural graphite and artificial graphite. Natural graphite may indicate graphite which may be naturally generated by separation from minerals, and when measured by XRD, the interplanar spacing (d002) of the (002) plane may be about 3.350 Å to about 3.360 Å. Artificial graphite may indicate graphite manufactured by graphitization, and if (e.g., when) measured by XRD, the interplanar spacing (d002) of the (002) plane may be about 3.355 Å to about 3.365 Å. Meanwhile, the amorphous carbon may have the interplanar spacing (d002) of the (002) plane of about 3.34 Å or less, if measured by XRD. The XRD may be measured using CuKα ray as a target line with an X-ray diffraction analyzer (e.g., product name: X'Pert, manufacturer: Malvern Panalytical) and by removing a monochromator to improve a peak density resolution. The measurement condition may be 2θ=10° to 80°, a scan speed (°/S) of 0.044 to 0.089, and a step size (°/step) of 0.013 to 0.039.

When the terms "about" or "substantially" are used in this specification in connection with a numerical value, it is intended that the associated numerical value includes a tolerance of ±10% around the stated numerical value. When ranges are specified, the range includes all values therebetween such as increments of 0.1%.

A negative electrode for a rechargeable lithium battery according to one or more example embodiment includes a current collector and a negative active material layer including a negative active material on the current collector, wherein a PCR (Plane angle Change Ratio) value defined by Equation 1 is about 5.0 or less. PCR = a peak intensity at 2H(002) plane/[a peak intensity at 3R(101) plane and a peak intensity at Cu(111) plane]

In Equation 1, the peak intensity is a value obtained if an X-ray diffraction is measured using a CuKα ray.

The peak intensity at 2H(002) plane and the peak intensity at 3R(101) plane may be a peak intensity for the negative active material layer, and the peak intensity at Cu(111) plane may be a peak intensity for the current collector.

The R plane represents a rhombohedral structure.

The peak intensity may be a height of a peak, or an area, e.g., an integral area of peak, or according to one or more example embodiments, the peak intensity may be the integral area of the peak.

In one or more example embodiments, the PCR value defined by Equation 1 is about 5.0 or less, or may be about 4.0 or less, about 0.1 or more, or about 1.0 or more. If the PCR value is about 5.0 or less, a battery exhibiting desired or improved battery characteristics, for example, improved lifecycle characteristic, high-rate characteristic, and efficiency, may be provided.

In one or more example embodiments, the current collector may be a Cu current collector where a peak at (111) plane appears, if an X-ray diffraction is measured using a CuKα ray. In another example embodiment, the current collector may be a Cu current collector which has a ratio ((I₁₁₁/I₂₀₀) of a peak intensity at (111) plane relative to a peak intensity at (200) plane of about 1.0 to about 80.0 measured by X-ray diffraction measurement using a CuKα ray. The ratio (I₁₁₁/I₂₀₀) of the peak intensity of the Cu current collector may be about 5.0 to about 50.0, or about 10.0 to about 30.0.

The Cu current collector may be or include a Cu foil or a Cu foam.

The Cu current collector where the peak at (111) plane appears, if the X-ray diffraction is measured by using a CuKα, represents the current collector having sufficient surface roughness on both sides, and this surface roughness may enable to improve the adherence between the active material layer and the current collector and to reduce the interface resistance, thereby exhibiting desired or improved cycle-life characteristic and high-rate characteristic. In some example embodiments, if the ratio (I₁₁₁/I₂₀₀) of the peak intensity of the Cu current collector is about 5.0 to about 50.0, the strength which is sufficient to withstand the stress applied to the current collector during expansion/shrinkage of the negative electrode occurred during charging and discharging, may be secured, thereby realizing a long cycle-life characteristic.

If the current collector is without the peak at (111) plane, even though the current collector is a Cu current collector, the surface roughness is insufficient, causing insufficient adherence between the active material layer and the current collector.

In one or more example embodiments, the X-ray diffraction is measured by using a CuKα ray as a target ray, and is measured by removing a monochromator to improve a peak intensity resolution. Herein, the measurement condition is 2Θ =10° to 80°, a scan speed (°/S) of 0.044 to 0.089, a step size (°/step) of 0.013 to 0.039.

In one or more example embodiments, the negative active material may be or include a carbon-based active material, or a mixture of the carbon-based active material and a Si-including active material.

The carbon-based active material may be or include crystalline carbon, and the crystalline carbon may be or include natural graphite, artificial graphite, or a combination thereof. The artificial graphite or natural graphite may have an unspecified shape, a sheet shape, a flake shape, a spherical shape, a fiber shape, or a combination thereof, but the shape is not limited thereto. If artificial graphite and natural graphite are mixed, a mixing ratio may be about 70:30 wt% to about 95:5 wt%.

The carbon-based active material may be or include a graphite composite. In one or more example embodiments, the graphite composite may include an aggregate where natural graphite particles are aggregated, an amorphous carbon on a surface of the particle, and a coating layer including an amorphous carbon surrounding on the aggregate. The natural graphite particles may have a particle diameter of about 5 µm to about 15 µm, e.g., about 5 µm to about 13 µm, about 5 µm to about 12 µm, or about 5.5 µm to about 11.5 µm, and the aggregate may have a particle diameter of about 8 µm to 24 µm, e.g., about 10 µm to about 24 µm, about 11 µm to about 24 µm, about 12 µm to about 24 µm, about 13 µm to about 24 µm, about 13 µm to about 23 µm, or about 13 µm to about 20 µm.

A thickness of the coating layer may be about 5 nm to about 50 nm, e.g., about 10 nm to about 50 nm, or about 20 nm to about 50 nm.

The amorphous carbon may be or include at least one of soft carbon, hard carbon, mesophase pitch carbide, sintered coke and a mixture thereof.

In another example embodiment, the graphite composite may include secondary particles where natural graphite is pulverized to prepare primary particles with a small particle size and the primary particles are aggregated and spheroidized, tertiary particles where the secondary particles are aggregated, and artificial graphite positioned on the surface of the primary particles and the secondary particles. The primary particles, the secondary particles, and the tertiary particles may include natural graphite.

The primary particles may have a particle diameter of about 4 µm to about 8 µm. The particle diameter of the primary particle may be, e.g., about 5 µm to about 8 µm, about 6 µm to about 8 µm, or about 6 µm to about 7 µm.

The secondary particles may have a particle diameter of about 5 µm to about 10 µm. The particle diameter of the secondary particle may be, e.g., about 6 µm to about 10 µm, about 6 µm to about 8 µm, or about 7 µm to about 8 µm.

The tertiary particles may have a particle diameter of about 9 µm to about 15 µm. For example, the tertiary particles may have a diameter of about 9.2 µm to about 15 µm, or about 9.5 µm to about 15 µm.

The graphite composite according to another example embodiment may include an amorphous carbon coating layer surrounding the tertiary particle. A thickness of the coating layer may be about 5 nm to about 50 nm, e.g., about 10 nm to about 50 nm, or about 20 nm to about 50 nm. The amorphous carbon may be or include at least one of soft carbon, hard carbon, mesophase pitch carbide, sintered coke, and a mixture thereof.

In one or more example embodiments, the natural graphite may be or include flake natural graphite, and this allows lithium intercalation to more actively occur. According to one or more example embodiments, the flaky natural graphite may be fine (small particle) flake natural graphite. If natural graphite is fine natural graphite, sites at which lithium ions are intercalated and deintercalated are increased in the same area, and the pathway through which lithium ions may transfer becomes shorter, making the pathway more appropriate for rapid (high rate) charge and discharge.

The Si-including negative active material may be or include silicon, a SiC composite, SiOₓ (0<x≤2), a Si-Q alloy (wherein Q is an element including at least one of an alkali metal, an alkaline-earth metal, a Group 13 element, a Group 14 element (except for Si), a Group 15 element, a Group 16 element, a transition metal, a rare earth element, or a combination thereof), or a combination thereof.

In one or more example embodiments, the Si-C composite may be or include silicon particles and amorphous carbon coated on a surface of the silicon particles. For example, the Si-C composite may include secondary particles (core) where silicon primary particles are agglomerated, and an amorphous carbon coating layer (shell) on the surface of the secondary particles. The amorphous carbon may be between the silicon primary particles, for example, may be coated on the silicon primary particles. The silicon-carbon composite may also include a core in which silicon particles are distributed in an amorphous carbon matrix and an amorphous carbon coating layer coated on a surface of the core.

The secondary particles are positioned at the center of the Si-C composite, so the secondary particles may be referred to as a core or a center part. The amorphous carbon coating layer may be referred to as an outer part or a shell.

The silicon particles may be or include nano silicon particles. A particle diameter of the nano silicon particles may be about 10 nm to about 1000 nm, or according to other example embodiments, may be about 20 nm to about 900 nm, about 20 nm to about 800 nm, about 20 nm to about 500 nm, about 20 nm to about 300 nm, or about 20 nm to about 150 nm. If the particle diameter of the nano silicon particles is within any of the above ranges, the substantial or extreme volume expansion caused during charge and discharge may be reduced or suppressed, and a breakage of the conductive path due to crushing of particles may be hindered or prevented.

A mixing ratio of the nano silicon and the amorphous carbon may be a weight ratio of about 20:80 to about 70:30.

In one or more example embodiments, the secondary particle or the core may further include crystalline carbon. If the silicon-carbon composite further includes crystalline carbon, the Si-C composite may include a secondary particle where silicon primary particles and crystalline carbon are aggregated, and an amorphous carbon coating layer on the surface of the secondary particle.

If the Si-C includes the silicon particles, the crystalline carbon, and the amorphous carbon, an amount of the amorphous carbon may be about 30 wt% to about 70 wt% based on the total 100 wt% of the Si-C composite, and an amount of the crystalline carbon may be about 1 wt% to about 20 wt% based on the total 100 wt% of the Si-C composite. An amount of the silicon particles may be, based on the total 100 wt% of the Si-C composite, about 20 wt% to about 69 wt%, or according to one or more example embodiments, about 30 wt% to about 60 wt%.

The particle diameter of the Si-C composite may be appropriately adjusted, and is not limited thereto.

If the secondary particles are surrounded at the surface thereof by the amorphous carbon, the thickness thereof may be appropriately adjusted, but, for example, may be about 5 nm to about 100 nm.

In one or more example embodiments, the negative electrode for the rechargeable lithium battery may include a coating region including the negative active material layer formed on the current collector, and an uncoated region where the negative active material is not formed on the current collector. The uncoated region refers to an area where the negative active material layer is not formed, and thus, refers to an area where only the current collector is present.

The negative electrode according to one or more example embodiments includes the uncoated region, and thus, the X-ray diffraction for the current collector may be readily measured and after charging and discharging, the X-ray diffraction measurement for the current collector may be considered from the X-ray diffraction measurement result for the uncoated region.

The PCR value defined by Equation 1 according to one or more example embodiments may be obtained from such a negative electrode and may also be obtained from the X-ray diffraction for the negative electrode after charging and discharging the battery including the negative electrode and separating the negative electrode therefrom. As such, the PCR value may have substantially the same value before charging and discharging, and after charging and discharging. The substantially same value may indicate to have a difference of ±0.01.

The negative active material layer may further include a binder and/or a conductive material.

For example, the negative active material layer may include the negative active material at about 90 wt% to about 99 wt% and the binder at about 1 wt% to about 10 wt%, or may include the negative active material at about 90 wt% to about 99 wt%, the binder at about 0.5 wt% to at about 5 wt%, and the conductive material at about 0.5 wt% to about 5 wt%.

The binder improves binding properties of the negative electrode active material particles with one another and with a current collector. The binder may be or include a non-aqueous binder, an aqueous binder, or a combination thereof.

The non-aqueous binder may be or include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

The aqueous binder may be or include a cellulose compound, or may be or include a cellulose compound together with the aqueous binder. The cellulose compound is referred to herein as a thickener because the cellulose compound may impart viscosity, or may constitute a binder and thus, the cellulose compound may be referred to as a binder. The cellulose compound may be used in an appropriate amount within the amount of the binder and is not limited thereto. The cellulose-based compound includes one or more of carboxymethyl cellulose, hydroxypropylmethyl cellulose, methyl cellulose, or alkali metal salts thereof. The alkali metal may or include be Na, K, or Li.

The conductive material is included to provide electrode conductivity. Any electrically conductive material may be a conductive material unless the electrically conductive material causes a chemical change. Examples of the conductive material may be a carbonaceous material such as at least one of natural graphite, artificial graphite, carbon black, acetylene black, ketjen black, a carbon fiber, a carbon nanofiber, carbon nanotubes, or the like; a metal-based material of a metal powder or a metal fiber including at least one of copper, nickel, aluminium, silver, or the like; a conductive polymer such as a polyphenylene derivative; or a mixture thereof.

The negative electrode according to one or more example embodiments may be prepared by applying the magnetic field. Hereinafter, the preparation of the negative electrode will be illustrated in more detail.

A current collector is positioned on and/or under the magnet, and a negative active material layer composition including a negative active material is subsequently coated thereon. This process may render to apply the magnetic field via the magnet.

The current collector may be or include a Cu current collector at which a peak at (111) plane appears, if the X-ray diffraction is measured by using a CuKα ray. In other example embodiments, the current collector may be or include a Cu current collector having a ratio (I₁₁₁/I₂₀₀) of a peak intensity at (111) plane relative to a peak intensity at (200) plane of about 1.0 to about 80.0, if an X-ray diffraction is measured using a CuKα ray.

A strength of a magnetic field may be about 1000 Gauss to about 10000 Gauss, about 2000 Gauss to about 8000 Gauss, or about 4000 Gauss to about 7000 Gauss.

The time for applying the magnetic field, e.g., the time for exposing the current collector to the magnetic field may be about 7 seconds to about 30 seconds, or about 8 seconds to about 25 seconds.

If the strength of the magnetic field, or the exposure time to the magnetic field is out of the range, it may be impossible to prepare a negative electrode having the PCR value defined by Equation 1 of about 5.0 or less.

In one or more example embodiments, if the negative electrode is prepared by applying the above magnetic field to the current collector having the above-mentioned X-ray diffraction characteristics, a negative electrode having the desired PCR value may be prepared. If the current collector does not have the X-ray diffraction characteristics described above, e.g., if the current collector is a Cu current collector that does not show a peak at (111) plane, the desired PCR value may be not obtained even if the magnetic field of the above intensity is applied.

In one or more example embodiments, the coating may be also carried out while the current collector is moved.

The negative active material layer composition may further include a binder and/or a conductive material. The negative active material, the binder, and the conductive material may be as described above.

The negative active material layer composition includes a solvent, and the solvent may be or include water or an organic solvent such as N-methyl pyrrolidone. For example, when the binder is or includes the aqueous binder, the solvent may be water.

Thereafter, the current collector on which the negative active material layer composition is coated, is dried and pressurized to prepare a negative electrode.

### Rechargeable lithium battery

Another example embodiment includes a rechargeable lithium battery including the negative electrode, a positive electrode, and an electrolyte.

### Positive electrode

The positive electrode may include a current collector and a positive electrode active material layer on the current collector. The positive electrode active material layer includes a positive electrode active material, and may further include a binder and/or a conductive material.

For example, the positive electrode may further include an additive that may constitute a sacrificial positive electrode.

An amount of the positive active material may be about 90 wt% to about 99.5 wt% based on 100 wt% of the positive active material layer, and amounts of the binder and the conductive material may be respectively 0.5 wt% to 5 wt% based on 100 wt% of the positive active material layer.

The positive active material may include a compound (lithiated intercalation compound) that is capable of intercalating and deintercalating lithium. In some example embodiments, at least one of a composite oxide of lithium and a metal including at least one of cobalt, manganese, nickel, or combinations thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free lithium nickel-manganese-based oxide, or a combination thereof.

For example, the following compounds represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8,0≤b≤0.5, 0≤c≤0.05); LiₐNi_{1-b-c}Co_{b}X_{c}O_{2-α}D_{α} (0.90≤a≤1.8,0≤b≤0.5, 0≤c≤0.5, 0<α<2); LiₐNi_{1-b-c}Mn_{b}X_{c}O_{2-α}D_{α} (0.90≤a≤1.8,0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8,0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes Mn, Al, or a combination thereof.

For example, the positive electrode active material may be or include a high nickel-based positive electrode active material having a nickel amount greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with a current collector. Examples of the binder may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any electrically conductive material may be used as a conductive material unless the electrically conductive material causes a chemical change. Examples of the conductive material may include a carbonaceous material such as natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminium, silver, or the like; a conductive polymer such as a polyphenylene derivative; or a mixture thereof.

The current collector may include Al, but is not limited thereto.

### Electrolyte

The electrolyte for a rechargeable lithium battery includes a non-aqueous organic solvent and a lithium salt.

**The** non-aqueous organic solvent may constitute a medium for transmitting ions taking part in the electrochemical reaction of a battery.

**The** non-aqueous organic solvent may include at least one of a carbonate-based, ester-based, ether-based, ketone-based, alcohol-based, or aprotic solvent.

**The** carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, or the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include ethanol, isopropyl alcohol, and the like, and the aprotic solvent may include nitriles such as at least one of R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The non-aqueous organic solvent may be used alone or in a mixture of two or more of the above discussed compounds.

If the carbonate-based solvent is used, the cyclic carbonate and the linear carbonate may be used together therewith, and the cyclic carbonate and the linear carbonate may be mixed at a volume ratio of about 1:1 to about 1:9.

The lithium salt dissolved in an organic solvent supplies a battery with lithium ions, basically operates the rechargeable lithium battery, and improves transportation of the lithium ions between positive and negative electrodes. Examples of the lithium salt include one or at least two supporting electrolyte salts from at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of 1 to 20, lithium trifluoromethane sulfonate, lithium tetrafluoroethane sulfonate, lithium difluorobis(oxalato)phosphate (LiDFBOP), lithium bis(oxalato) borate (LiBOB).

### Separator

A separator may be disposed between the positive electrode and the negative electrode depending on a type of a rechargeable lithium battery. The separator may include at least one of polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one or both surfaces of the porous substrate.

The porous substrate may be or include a polymer film formed of any one of polyolefins such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acryl-based polymer.

The inorganic material may be or include an inorganic particle including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and an inorganic material may be mixed in one coating layer, or a coating layer including an inorganic material may be stacked.

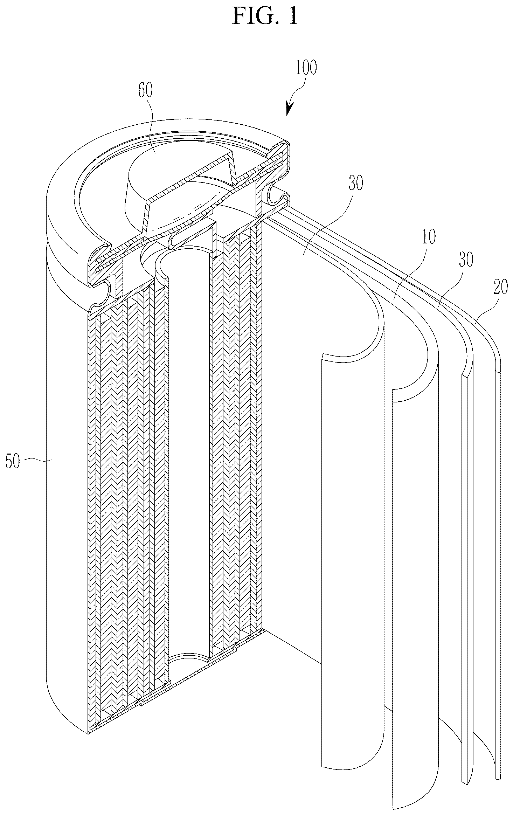

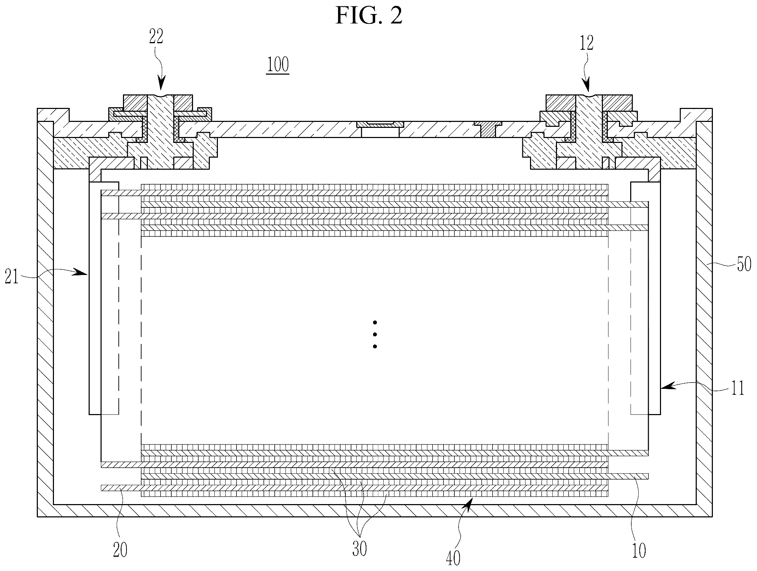

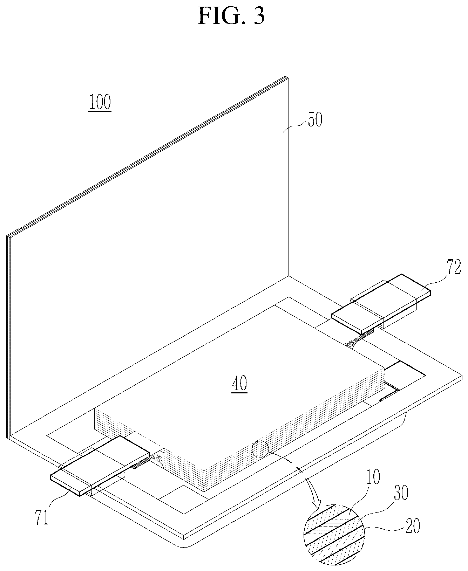

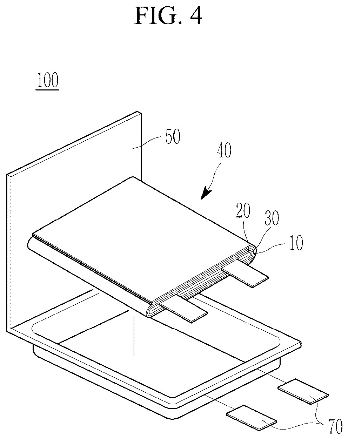

The rechargeable lithium battery may be classified into cylindrical, prismatic, pouch, or coin-type batteries, and the like depending on the shape thereof. FIG. 1 to FIG. 4 are schematic views illustrating a rechargeable lithium battery according to an example embodiment, and FIG. 1 shows a cylindrical battery, FIG. 2 shows a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may also include a sealing member 60 sealing the case 50, as shown in FIG. 1. In FIG. 2, the rechargeable lithium battery 100 may include a positive electrode lead tab 11 and a positive terminal 12, a negative electrode lead tab 21, and a negative terminal 22. As shown in FIG. 3 and FIG. 4, the rechargeable lithium battery 100 may include an electrode tab 70 illustrated in FIG. 4, which may be serving as an electrical path for inducing the current formed in the electrode assembly 40 to the outside, for example, a positive electrode tab 71 and a negative electrode tab 72 illustrated in FIG. 3.

The rechargeable lithium battery according to an example embodiment may be used in, e.g., automobiles, mobile phones, and/or various types of electric devices, as non-limiting examples.

The following Examples and Comparative Examples are provided in order to highlight characteristics of one or more example embodiments, but it will be understood that the Examples and Comparative Examples are not to be construed as limiting the scope of the example embodiments. Further, it will be understood that the example embodiments are not limited to the particular details described in the Examples and Comparative Example.

### Example 1

A Cu foil current collector exhibiting a (111) peak was employed in the X-ray diffraction measurement using a CuKα ray as a target ray,. The X-ray diffraction was measured by using X'Pert (available from PANalytical B.V.) XRD equipment, but monochromator equipment was removed in order to improve peak intensity resolution. The measurement was performed under a condition of 2θ = 10° to 80°, a scan speed (°/S) = 0.06436, and a step size of 0.026°/step.

An artificial graphite and a Si-C composite negative active material (artificial graphite at 92 wt%, Si-C composite at 5 wt%), a styrene butadiene rubber at 2 wt%, and carboxymethylcellulose at 1 wt% were mixed in a water solvent to prepare a negative active material layer slurry.

As the Si-C composite, a composite including a secondary particle core where silicon nano particles and natural graphite were aggregated, and a soft carbon layer on the core was utilized. Based on 100 wt% of the Si-C composite, an amount of the silicon nano particles was 40 wt%, an amount of natural graphite was 20 wt%, and an amount of soft carbon was 40 wt%. The silicon nano particle had an average particle diameter (D50) of 20 nm, and the soft carbon layer had an average thickness of 100 nm.

The Cu foil current was positioned on a magnet with a magnetic field of 3000 Gauss, the negative active material layer slurry was coated on some region of the Cu foil current, while the Cu foil current collector was moved to expose a magnetic field for 9 seconds. Thereafter, the resulting product was dried and pressurized to prepare a negative electrode including a coating region in which the negative active material layer was formed, and an uncoated region in which the negative active material layer was not formed.

96 wt% of a LiCoO₂ positive active material, 2 wt% of a carbon black conductive agent, and 2 wt% of a polyvinylidene fluoride binder were mixed in an N-methylpyrrolidone solvent to prepare a positive active material slurry. The prepared slurry was coated on an Al substrate and dried, followed by pressurizing to prepare a positive electrode.

Utilizing the negative electrode, the positive electrode, and an electrolyte, a rechargeable lithium cell was fabricated. As the electrolyte, 1M LiPF₆ dissolved in a mixed solvent of ethylene carbonate and diethyl carbonate (50:50 volume ratio) was utilized.

### Example 2

A rechargeable lithium cell was fabricated by the same procedure as in Example 1, with a difference of using a magnet with a magnetic field of 4000 Gauss.

### Example 3

A rechargeable lithium cell was fabricated by the same procedure as in Example 1, with a difference that the Cu foil current collector of Example 1 was positioned on a magnet having a magnetic field strength of 5000 Gauss, the negative active material layer slurry of Example 1 was partially coated thereon, while the Cu foil current collector was moved, and subsequently exposed to a magnetic field for 20 seconds.

### Example 4

A rechargeable lithium cell was fabricated by the same procedure as in Example 1, except that the Cu foil current collector of Example 1 was positioned on a magnet having a magnetic field strength of 4000 Gauss, the negative active material layer slurry of Example 1 was partially coated thereon, while the Cu foil current collector was moved, and subsequently exposed to a magnetic field for 15 seconds.

### Comparative Example 1

A rechargeable lithium cell was fabricated by the same procedure as in Example 1, with a difference of using the Cu foil current collector that did not show the peak at (111) plane.

### Comparative Example 2

A rechargeable lithium cell was fabricated by the same procedure as in Example 1, with a difference that the Cu foil current collector of Example 1 was positioned on a magnet, the negative active material layer slurry of Example 1 was partially coated thereon, while the Cu foil current collector was moved, and subsequently exposed to a magnetic field for 5 seconds.

### Experimental Example 1) Evaluation of X-ray diffraction characteristic

The cells according to Examples 1 to 4, and Comparative Examples 1 and 2 were twice charged and discharged at 0.1 C and fully discharged at 0.1 C to 2.75 V. The completely-discharged battery cells were disassembled to obtain negative electrodes. In the resulting negative electrode, as for the negative active material layer and the uncoated region, an X-ray diffraction was measured by using X'Pert (available from PANalytical B.V.) XRD equipment with a CuKα ray as a target ray and removing the monochrometer to improve a peak intensity resolution. Herein, the measurement was performed under a condition of 2θ = 10° to 80°, a scan speed (°/S) = 0.06436, and a step size of 0.026 °/step.

Utilizing the measured peak intensity at 2H(002) plane, the peak intensity at 3R(101)R plane, and the peak intensity at Cu(111) plane, a single peak fitting was performed using a WinPlotR program distributed by Institute Laue-Langevin, and then a PCR defined by Equation 1 was calculated. The results are shown in Table 1. PCR = a peak intensity at 2H(002) plane/[a peak intensity at 3R(101) plane and a peak intensity at Cu(111) plane]

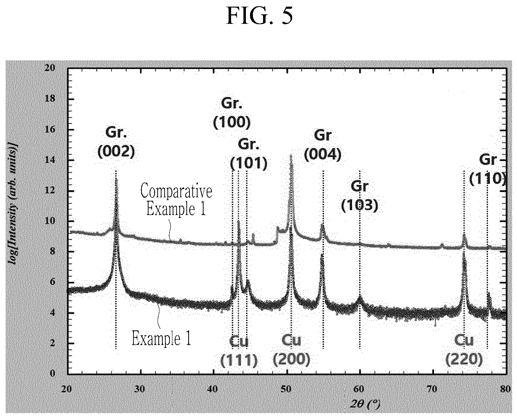

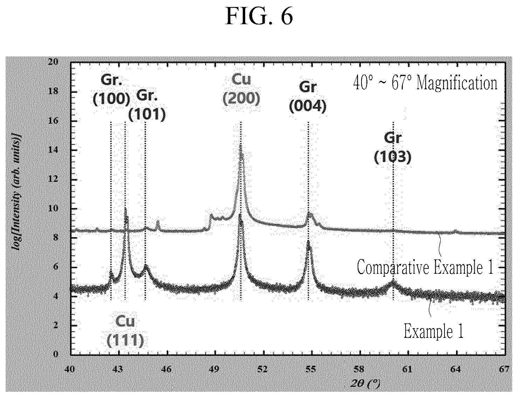

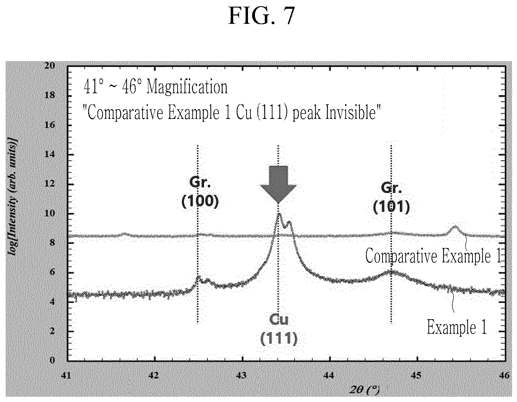

Regarding the negative active material layers and the Cu foil current collectors of Example 1 and Comparative Example 1, the X-ray diffraction measurement graph is shown in FIG. 5. In the graph in shown in FIG. 5, the result shown at 2θ = 40° to 67° was enlarged (magnified) and illustrated in FIG. 6, and the result shown at 2θ = 41° to 46° was enlarged (magnified) and illustrated in FIG. 7.

As shown in FIG. 5 to FIG. 7, the Cu foil current collector of Example 1 exhibited the peak corresponding to the (111) plane, but the Cu foil current collector of Comparative Example 1 exhibited no peak corresponding to the (111) plane.

The peak intensities at (002) plane and at (101)R plane of the negative active material layer and the peak intensity at an uncoated region, e.g., (111) plane of the current collector are shown in Table 1.

From these results, the PCR values calculated based on Equation 1 are shown in Table 1. PCR = a peak intensity at 2H(002) plane/[a peak intensity at 3R(101) plane and a peak intensity at Cu(111) plane]

In Equation 1, the peak intensity is a value from an X-ray diffraction measurement by using a CuKα ray.

### Experimental Example 2) Evaluation of cycle-life characteristic

The cells according to Examples 1 to 4, and Comparative Examples 1 and 2 were, under a condition of constant current (CC), 1.8 C, 4.25 V cut-off charged, and under a condition of constant voltage (CV), 0.025 C cut-off charged, constant current/constant voltage charged, paused for 10 minutes, constant current discharged in a 1.0 C, 3.0 V cut-off condition, and paused for 10 minutes, as a one charge and discharge cycle, and this cycle was repeated total 200 cycles. The capacity retention according to charge and discharge cycles was obtained from a ratio of discharge capacity at each cycle relative to discharge capacity at the 1^{st} cycle. The results are shown in Table 1.

### Experimental Example 3) Evaluation of High rate charge

The half cells according to Examples 1 to 4 and Comparative Examples 1 and 2 were charged and discharged under the following condition, in the voltage range of 0.01 V to 1.5 V vs. Li/Li⁺.
1 C charge/0.5 C discharge once
2 C charge/0.5 C discharge once
3 C charge/0.5 C discharge once
4 C charge/ 0.5 C discharge once
5 C charge/ 0.5 C discharge once
6 C charge/ 0.5 C discharge once
2 C charge/ 0.2 C discharge once

A ratio of charge capacity at final 2 C relative to charge capacity at 0.2 C was calculated. The results are shown in Table 1 as high rate charging rate.

**Table 1**

| | PCR | 2H(002) | 3R(101)+Cu(111) | Capacity retention (%) | High rate charging rate (2C/0.2C) |
|---|---|---|---|---|---|
| Example 1 | 5.0 | 16040 | 3205 | 93.2 | 60.5 |
| Example 2 | 4.0 | 15180 | 3793 | 93.8 | 60.8 |
| Example 3 | 0.1 | 8532 | 85213 | 95 | 65 |
| Example 4 | 1.0 | 30565 | 30586 | 94 | 63 |
| Comparative Example 1 | 5.1 | 16153 | 3167 | 89 | 55.6 |
| Comparative Example 2 | 5.1 | 15329 | 3005 | 83 | 48 |

As shown in Table 1, the cells of Examples 1 to 4 having the PCR value defined by Equation 1 is 5.0 or less, exhibited desired or improved capacity retention and high rate charge rate.

Whereas, Comparative Examples 1 and 2 having the PCR value of more than 5, exhibited deteriorated capacity retention and high rate charge rate. Among these, Comparative Example 2 in which the magnetic field was applied thereto for a short time, exhibited abruptly deteriorated capacity retention and high-rate charge rate, and thus, from this result, it may be shown that insufficiently applying magnetic field cause to significantly deteriorate characteristics, compared to the battery to which the magnetic field is not applied.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

## Claims

1. A negative electrode for a rechargeable lithium battery, the negative electrode comprising:
a current collector and a negative active material layer comprising a negative active material on the current collector, wherein the current collector comprises a Cu current collector for which a peak at (111) plane appears, and
wherein a PCR (Plane angle Change Ratio) value defined by Equation 1 is about 5.0 or less; PCR = a peak intensity at 2H(002) plane/[a peak intensity at 3R(101) plane and a peak intensity at Cu(111) plane];
wherein the peak intensity is an X-ray diffraction peak measured by using a CuKα ray.

2. The negative electrode for a rechargeable lithium battery as claimed in claim 1, wherein the peak intensity at 2H(002) plane and the peak intensity at 3R(101) plane correspond to the negative active material layer, and the peak intensity at Cu(111) plane corresponds to a peak intensity for the current collector.

3. The negative electrode for a rechargeable lithium battery as claimed in claim 1 or claim 2, wherein the PCR value is about 4.0 or less.

4. The negative electrode for a rechargeable lithium battery as claimed in any one of claims 1 to 3, wherein:
(i) the PCR value is about 0.1 or more; or
(ii) the PCR value is about 1.0 or more.

5. The negative electrode for a rechargeable lithium battery as claimed in any one of claims 1 to 4, wherein the current collector comprises a Cu current collector, wherein a ratio ((I₁₁₁/I₂₀₀) of a peak intensity at (111) plane relative to a peak intensity at (200) plane is about 1.0 to about 80.0 measured by X-ray diffraction measurement using a CuKα ray.

6. The negative electrode for a rechargeable lithium battery as claimed in any one of claims 1 to 5, wherein the peak intensity is an integral area of a peak.

7. The negative electrode for a rechargeable lithium battery as claimed in any one of claims 1 to 6, wherein the negative active material comprises one of a carbonaceous active material, and a mixture of the carbonaceous active material and a Si-including active material.

8. The negative electrode for a rechargeable lithium battery as claimed in claim 7, wherein the carbon-based active material comprises crystalline carbon.

9. The negative electrode for a rechargeable lithium battery as claimed in claim 8, wherein the crystalline carbon comprises at least one of natural graphite, artificial graphite.

10. The negative electrode for a rechargeable lithium battery as claimed in any one of claims 7 to 9, wherein:
(i) the Si-including active material comprises a composite of Si and carbon.

11. The negative electrode for a rechargeable lithium battery as claimed in any one of claims 1 to 10, wherein the negative electrode for the rechargeable lithium battery comprises a coated region including the negative active material layer on the current collector and an uncoated region, wherein the negative active material layer is not formed on the current collector.

12. The negative electrode for a rechargeable lithium battery as claimed in any one of claims 1 to 11, wherein the negative electrode is prepared by an application of a magnetic field.

13. The negative electrode for a rechargeable lithium battery as claimed in claim 12, wherein:
(i) the application of the magnetic field comprises a positioning of the current collector at least one of on and beneath a magnet; and/or
(ii) the magnetic field has a strength of about 1000 Gauss to about 10000 Gauss.

14. A rechargeable lithium battery, comprising:
the negative electrode of any one of claims 1 to 13;
a positive electrode; and
a non-aqueous electrolyte.
